# EUROPÄISCHE PATENTSCHRIFT

(11) **EP 1 314 601 B1**
(45) Veröffentlichungstag und Bekanntmachung des Hinweises auf die Patenterteilung: **30.07.2008**
(21) Anmeldenummer: 02025754.9
(22) Anmeldetag: 15.11.2002
(51) Int. Cl.: B60J 7/12

(54) **Verstellbares Fahrzeugdach mit einem Faltverdeck**
Openable vehicle roof with a folding top
Toit ouvrant de véhicule avec une capote pliante

(30) Priorität: 27.11.2001 DE 10157819
(43) Veröffentlichungstag der Anmeldung: 28.05.2003
(73) Patentinhaber: CTS Fahrzeug-Dachsysteme GmbH, 74321 Bietigheim-Bissingen (DE)
(72) Erfinder: Hahn, Gerald, 21149 Hamburg (DE)
(74) Vertreter: Müller, Gottfried

(56) Entgegenhaltungen:
- EP-A- 0 749 859
- EP-A- 1 024 042
- EP-A- 1 104 710
- DE-C- 4 031 270
- DE-U- 29 516 415
- US-A- 6 048 021

## Beschreibung

Die Erfindung bezieht sich auf ein verstellbares Fahrzeugdach mit einem Faltverdeck nach dem in der EP 1104710 A offenbarten Oberbegriff des Anspruches 1.

Aus der Druckschrift EP 0 749 859 A1 ist ein Faltverdeck für ein Cabriolet-Fahrzeug bekannt, das ein Verdeckgestänge mit einem darauf aufgespannten Verdeck-Bezugstoff umfasst und das zwischen einer den Fahrzeuginnenraum überdeckenden Schließposition und einer Ablageposition zu verstellen ist, in welcher das Faltverdeck in einem heckseitigen Verdeckkasten abgelegt ist. Um in Schließposition des Verdecks die erforderliche Stoffspannung dauerhaft aufrechterhalten zu können, ist ein Stoffspannbügel vorgesehen, welcher in Schließposition etwa horizontal im hinteren, heckseitigen Bereich des Faltverdeckes sich quer zur Fahrzeuglängsachse erstreckt und den Bezugstoff mit der erforderlichen Spannung beaufschlagt. Der Stoffspannbügel ist als Teil des Verdeckgestänges an einem karosseriefesten Hauptlager schwenkbar gelagert und kann über einen Hilfsaktuator zwischen der Spannstellung und einer hochgeklappten Lösestellung verstellt werden. Die übrigen Gestängeteile des Verdeckgestänges werden zum Öffnen und Schließen des Verdecks von einem Hauptaktuator beaufschlagt.

Der Hilfsaktuator greift nicht unmittelbar an dem Stoffspannbügel an, sondern an einem Spanngestänge, welches ebenfalls schwenkbar an dem karosseriefesten Hauptlager gehalten ist und ein zweiteiliges Sturmgestänge, über das der Stoffspannbügel zu spannen ist, zwischen Spannstellung und Lösestellung verstellt.

Dieses Faltverdeck beansprucht bei geöffnetem Dach einen verhältnismäßig großen Ablageraum, da sowohl der Stoffspannbügel als auch die weiteren Gestängeteile schwenkbar an dem karosseriefesten Hauptlager angebunden sind und daher nur eine ausschließlich rotatorische Stellbewegung bei der Überführung zwischen geschlossener und abgelegter Position ausführen können, so dass sämtliche Gestängeteile des Verdecks in Ablageposition horizontal angeordnet sind oder in einem Winkel schräg nach unten abgelegt sind. Diese Ablagesituation erfordert einen großen Stauraum.

Aus der Druckschrift EP 1 104 710 A1 ist ein verstellbares Fahrzeugdach mit einem Faltverdeck und einem Verdeckgestänge bekannt, dem ein Stoffspannbügel zur Beaufschlagung des Verdeckbezugstoffes in der Schließstellung des Faltverdeckes zugeordnet ist. Der Stoffspannbügel wird über ein zweiteiliges Sturmgestänge in seiner Spannstellung gesichert, um ein versehentliches Aufklappen des Stoffspannbügels zu verhindern. Das Sturmgestänge wird von einem ebenfalls zweiteiligen Spanngestänge beaufschlagt, das zwei gelenkig gekoppelte Spannlenker umfasst, von denen ein erster Spannlenker gelenkig mit einem Lenker des Sturmgestänges verbunden ist und ein zweiter Spannlenker gelenkig mit einem Schwenkhebel gekoppelt ist, der von einem Hilfsaktuator zur Überführung des Stoffspannbügels von Löse- in Spannstellung beaufschlagt wird.

Um sicherzustellen, dass der Stoffspannbügel bei geschlossenem Fahrzeugdach in seiner Spannstellung verharrt und nicht durch an der Außenhaut des Fahrzeugdaches angreifende Windkräfte versehentlich angehoben wird, muss der Hilfsaktuator permanent eine Haltekraft aufbringen, um jegliche Bewegung im Übertragungsweg zwischen Hilfsaktuator und Stoffspannbügel zu verhindern. Bei dem Hilfsaktuator handelt es sich um ein hydraulisches Stellelement, welches zur Verhinderung von Kriechbewegungen bei geschlossenem Fahrzeugdach blockiert werden muss. Hierfür sind jedoch zusätzliche konstruktive Maßnahmen erforderlich.

Der Erfindung liegt das Problem zugrunde, ein Faltverdeck in Offenstellung des Daches raumsparend im heckseitigen Ablageraum zu verstauen.

Dieses Problem wird erfindungsgemäß mit den Merkmalen des Anspruches 1 gelöst. Die Unteransprüche geben zweckmäßige Weiterbildungen an.

Erfindungsgemäß ist der Stoffspannbügel schwenkbar an einem Hauptlenker des Verdeckgestänges gelagert, der seinerseits an der Fahrzeugkarosserie schwenkbar gelagert ist. Dem Stoffspannbügel wird dadurch eine doppelte Schwenkbewegung aufgeprägt, nämlich zum einen die Drehung um die eigene Drehachse an dem karosserieseitigen Hauptlenker, zum andern die Drehung des Hauptlenkers gegenüber der Fahrzeugkarosserie. Diese kombinierte Drehbewegung um zwei beabstandete und parallele Drehachsen ermöglicht es, den Spannbügel in einer etwa horizontalen Lage bei geöffnetem und abgesenktem Verdeck abzulegen, wobei der Spannbügel in dieser Position gegenüber seiner aktiven Spannstellung bei geschlossenem Fahrzeugverdeck näherungsweise translatorisch nach unten in Richtung des Bodens des Ablageraumes unter Beibehaltung seiner ursprünglichen Ausrichtung verschoben ist. Hierdurch wird eine schleifende Relativbewegung zwischen Spannbügel und Verdeckkastenboden beim Verlagern des Verdecks vermieden. Auf Grund der horizontalen Ablageposition des Spannbügels kann dieser am Verdeckboden abgelegt werden, wodurch gegenüber einer schrägen Ablageposition ein erheblich geringeres Stauvolumen erforderlich ist. Es ist insbesondere auch möglich, in Ablageposition das restliche Verdeckgestänge oberhalb des Spannbügels abzulegen.

Ein weiterer Vorteil dieser Ausführung besteht darin, dass eine aktive, energieverbrauchende Bewegung des Stoffhaltebügels aus seiner Spannposition in die aufgeklappte Lösestellung grundsätzlich nur insoweit erforderlich ist, um die Spannung aus dem Verdeckbezugstoff zu lösen, so dass das übrige Verdeckgestänge ohne Beeinträchtigung durch den Bezugstoff in die Öffnungsposition des Verdecks überführt werden kann. Nachdem die Lösestellung des Stoffhaltebügels erreicht ist, kann dagegen die weitere, aktiv geführte Bewegung des Stoffhaltebügels über den Hauptaktuator folgen, über den der Hauptlenker zwischen Öffnungsposition und Schließposition verstellt wird. Eine weitere Relativbewegung zwischen der Hauptsäule des Faltverdeckes und Stoffspannbügel kann passiv durch den Einsatz geeigneter Führungselemente erfolgen. Es ist hierbei insbesondere möglich, dem Stoffspannbügel einen Hilfsaktuator zuzuordnen, welcher in zu Beginn der Öffnungsbewegung des Verdecks den Stoffspannbügel anhebt und in Lösestellung des Stoffspannbügels zeitlich vor der Verstellung des Hauptlenkers bereits seine Endstellung erreicht. Im Anschluss daran wirkt der Hilfsaktuator auf Grund seiner bereits erreichten Endposition als passives Führungselement, welches bei einer Verschwenkung des Hauptlenkers mittels des Hauptaktuators eine Relativ-Schwenkbewegung des Stoffspannbügels gegenüber der Hauptsäule bewirkt.

Zweckmäßig ist der Stoffspannbügel in Schließstellung des Faltverdecks von einem Sturmgestänge in der Spannstellung gehalten, welches insbesondere zweiteilig mit einem zwischenliegenden Gelenk ausgeführt ist und in Spannstellung eine totpunktnahe Position einnimmt, um ein versehentliches Lösen des Stoffspannbügels aus seiner Spannstellung zu verhindern. Das Sturmgestänge ist bevorzugt mit einem Spanngestänge gekoppelt, an welchem vorteilhaft der Hilfsaktuator zur Überführung des Stoffspannbügels zwischen Spann- und Lösestellung angreift. Das Spanngestänge ist bevorzugt ebenfalls zweiteilig ausgeführt und weist einen ersten und einen zweiten Spannlenker auf, die jeweils gelenkig mit dem Hauptlenker bzw. dem Sturmgestänge verbunden sind und außerdem über ein zwischenliegendes Gelenk aneinander gekoppelt sind. Das Spanngestänge kann in Spannstellung des Stoffspannbügels ebenfalls eine Übertotpunktposition einnehmen. Der Hilfsaktuator, über den die Verstellung des Stoffspannbügels während der ersten Bewegungsphase beim Öffnen des Verdeckes einzustellen ist, greift zweckmäßig an demjenigen Spannlenker an, welcher gelenkig mit dem Hauptlenker gekoppelt ist.

Weitere Vorteile und zweckmäßige Ausführungen sind den weiteren Ansprüchen, und beispielhaft der Figurenbeschreibung und den Zeichnungen zu entnehmen. Es zeigen:
- Fig. 1: eine Seitenansicht auf ein verstellbares Faltverdeck mit einem Verdeckgestänge und einem Stoffspannbügel, dargestellt in Schließstellung des Verdecks mit dem Stoffspannbügel in Spannstellung,
- Fig. 2: eine Fig. 1 entsprechende Ansicht, wobei der Stoffspannbügel geringfügig aus seiner Spannstellung in Richtung der Lösestellung angehoben ist,
- Fig. 3: eine weitere, den Fig. 1 und 2 entsprechende Darstellung, jedoch mit dem Stoffspannbügel in hochgestellter Lösestellung,
- Fig. 4: das gesamte Faltverdeck in einer Ablagestellung in einem heckseitigen Stauraum.

In den folgenden Figuren sind gleiche Bauteile mit gleichen Bezugszeichen versehen.

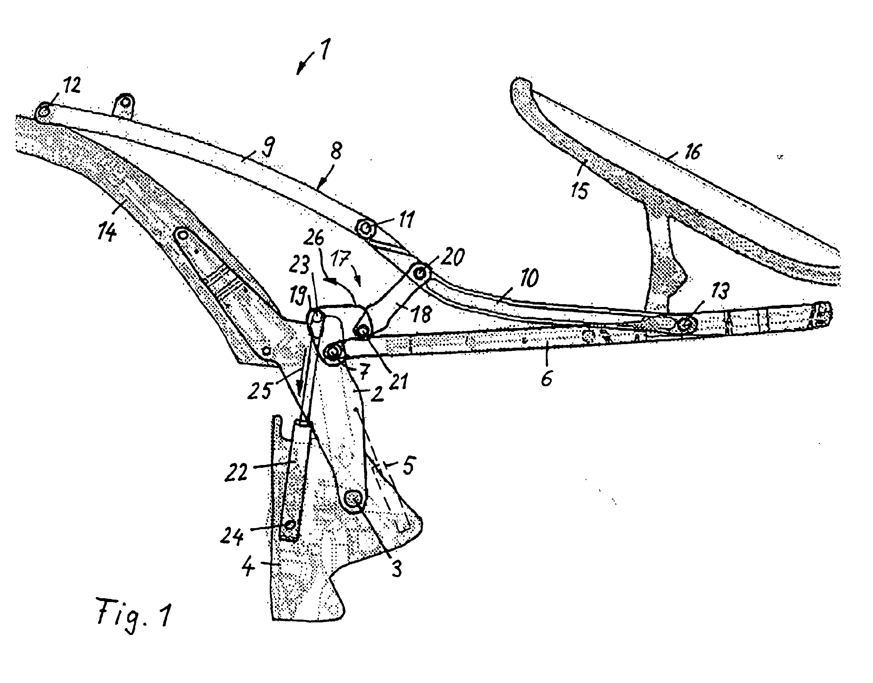

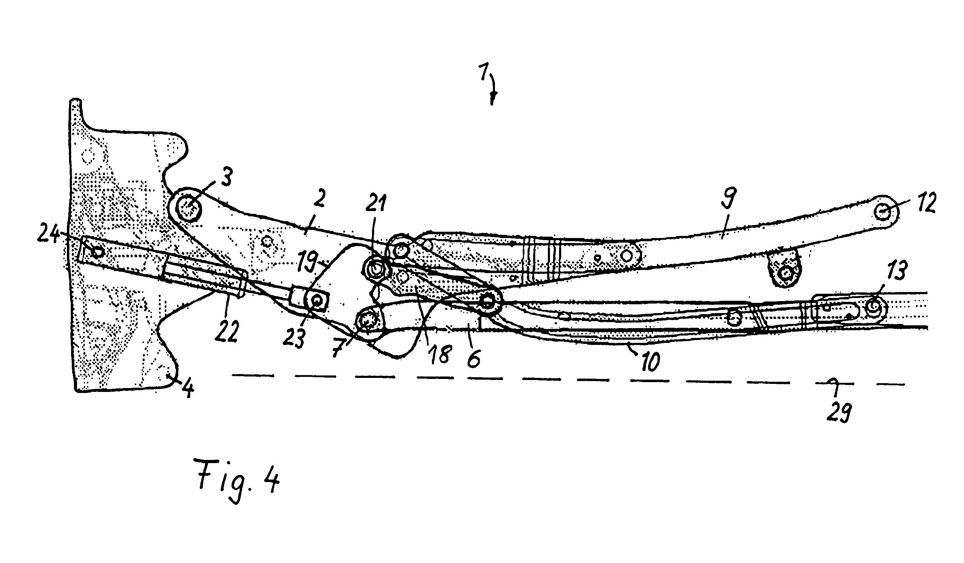

Das in Fig. 1 dargestellte Verdeckgestänge 1 als Teil eines zwischen einer Schließposition und einer geöffneten Position zu verstellenden Faltverdeckes umfasst eine Mehrzahl einzelner, kinematisch gekoppelter Gestängeteile, auf die ein in den Figuren nicht gezeigter Verdeck-Bezugstoff aufgespannt ist. Das Verdeckgestänge 1 umfasst einen Hauptlenker 2, welcher über ein Gelenk 3 schwenkbar an einer karosseriefesten Konsole 4 gehalten und über einen andeutungsweise dargestellten Hauptaktuator 5, insbesondere einen Hydraulikzylinder, zwischen der in Fig. 1 dargestellten Schließposition des Faltverdecks und der in Fig. 4 gezeigten geöffneten bzw. Ablageposition des Faltverdecks zu verschwenken ist.

Das Verdeckgestänge 1 umfasst weiterhin einen Stoffspannbügel 6, welcher über ein Gelenk 7 schwenkbar am Hauptlenker 2 gehalten ist. Die Drehachsen der Gelenke 3 und 7 verlaufen parallel und in Querrichtung quer zur Fahrzeuglängsachse. Der Stoffspannbügel 6 ist in der in Fig. 1 dargestellten Spannstellung näherungsweise horizontal ausgerichtet und wird in dieser Spannstellung von einem Sturmgestänge 8 gehalten, welches zwei über ein zwischenliegendes Gelenk 11 gekoppelte Sturmhebel 9 und 10 umfasst, wobei der vordere, der Fahrzeugvorderseite zugewandte Sturmhebel 9 über ein Gelenk 12 schwenkbar mit einer Hauptsäule 14 des Verdeckgestänges gekoppelt ist, die fest mit dem Hauptlenker 2 verbunden ist, und der hintere, dem Fahrzeugheck zugewandte Sturmhebel 10 über ein Gelenk 13 schwenkbar mit dem Stoffspannbügel 6 verbunden ist.

Das Sturmgestänge 8 befindet sich in Spannposition des Stoffspannbügels 6 in einer totpunktnahen Lage, bei der das mittlere Gelenk 11 nahe diesseits oder jenseits einer Verbindungslinie zwischen den Gelenken 12 und 13 am vorderen bzw. hinteren Sturmhebel 12 bzw. 13 liegt, und wird über ein Spanngestänge 17 in dieser Lage gehalten und auch aus dieser Lage in eine Lösestellung überführt, in welcher der Stoffspannbügel angehoben ist und die Spannung aus dem Verdeck-Bezugstoff gelöst ist, wobei zur Überführung in die Lösestellung das mittlere Gelenk 11 die Verbindungslinie zwischen den äußeren Gelenken 12 und 13 schneidet und dadurch die Übertotpunktlage verlässt. Das Spanngestänge 17 umfasst einen ersten Spannlenker 18 und einen zweiten Spannlenker 19, die über ein zwischenliegendes Gelenk 21 schwenkbar aneinander gekoppelt sind. Der erste Lenker 18 ist außerdem über ein Gelenk 20 schwenkbar mit dem hinteren Sturmhebel 10 des Sturmgestänges 8 verbunden; zweckmäßig befindet sich das Gelenk 20 in der Nähe des mittleren Gelenkes 11 zwischen den beiden Sturmhebeln 9 und 10.

Der zweite Spannlenker 19 ist über das Gelenk 7, welches zugleich das Gelenk des Stoffspannbügels 6 darstellt, schwenkbar mit dem Hauptlenker 2 verbunden. Weiterhin ist ein Hilfsaktuator 22, insbesondere ein Hydraulikzylinder, vorgesehen, welcher einenends über ein Gelenk 23 schwenkbar mit dem Spannlenker 19 und anderenends über ein Gelenk 24 schwenkbar mit der karosseriefesten Konsole 4 gekoppelt ist. Das Gelenk 23 des Hilfsaktuators 22 am zweiten Spannlenker 19 bildet gemeinsam mit dem Gelenk 7 sowie dem Gelenk 21 ein Dreieck.

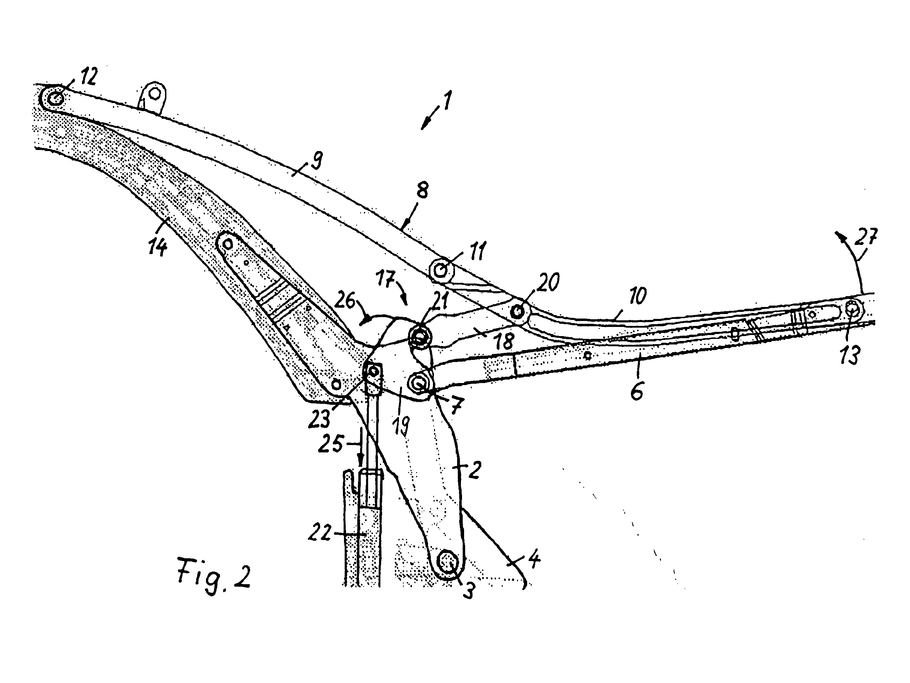

In der Spannstellung des Stoffspannbügels 6 befindet sich das Spanngestänge 17 in einer Übertotpunktlage, in der das mittlere Gelenk 21 des ersten Spannlenkers 18 jenseits einer Verbindungslinie zwischen dem äußeren Gelenk 20 zum Sturmhebel 10 und dem gegenüberliegenden, äußeren Gelenk 7 zum Hauptlenker 2 liegt, wobei zum Verlassen der Übertotpunktlage die Verbindungslinie vom mittleren Gelenk 21 überschritten werden muss. Um den Stoffspannbügel 6 aus seiner in Fig. 1 dargestellten Spannstellung in die Lösestellung zu versetzen, wird zunächst - bei unveränderter Position des Hauptlenkers 2 - der Hilfsaktuator 22 betätigt und der Stellzylinder des Hilfsaktuators in Pfeilrichtung 25 eingezogen. Auf Grund der schwenkbaren Lagerung des zweiten Spannlenkers 19 über das Gelenk 7 am Hauptlenker 2 wird die translatorische Stellbewegung des Hilfsaktuators 22 in eine Schwenkbewegung des Spannlenkers 19 im Gegenuhrzeigersinn in Pfeilrichtung 26 umgesetzt. Hierdurch wird sowohl das Spanngestänge 17 als auch das Sturmgestänge 8 aus der jeweiligen Übertotpunktlage bzw. totpunktnahen Lage herausgehoben und die in Fig. 2 dargestellte Position erreicht, in welcher der Stoffspannbügel 6 zwar immer noch seine näherungsweise horizontale Spannposition beibehält, nun aber nicht mehr durch die Übertotpunktlagen des Spanngestänges gesichert ist.

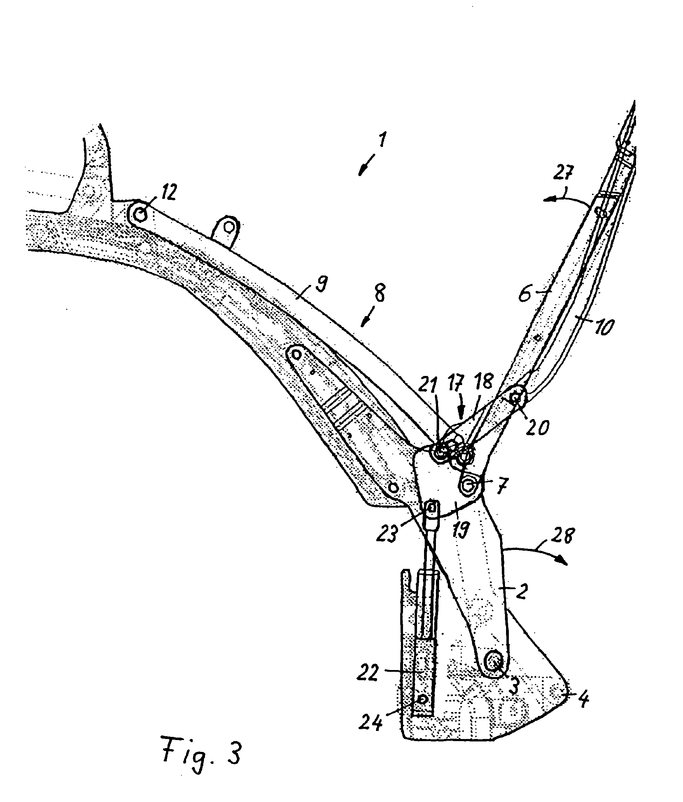

Bei einer weiteren Verstellung des Stellgliedes des Hilfsaktuators 22 in Pfeilrichtung 25 und eine hierdurch ausgelöste weitere Verschwenkung des zweiten Spannlenkers 19 in Pfeilrichtung 26 relativ zum Hauptlenker 2 wird der Stoffspannbügel 6 in Pfeilrichtung 27 um sein Gelenk 7 angehoben. Dadurch wird der in Fig. 3 dargestellte Zustand erreicht, in welcher der Stoffspannbügel 6 sich in seiner Lösestellung befindet und gegenüber der näherungsweise horizontalen Position um etwa 45° nach oben aufgeschwenkt ist. Die Sturmhebel 9 und 10 des Sturmgestänges 8 führen eine entsprechende Schwenkbewegung um ihr zwischenliegendes Gelenk 11 aus. Das Stellglied des Hilfsaktuators 22 hat nun seine maximal eingezogene Position erreicht, so dass der Stoffspannbügel 6 nicht weiter im Gegenuhrzeigersinn verschwenkt wird. Der Hauptlenker 2 behält unverändert seine Ausgangsposition bei, die der Schließstellung des Fahrzeugdaches entspricht.

Zur Überführung des Verdecks in die Offen- bzw. Ablagestellung wird der Stoffspannbügel zuerst aus der in Fig. 3 gezeigten Lösestellung wieder in die in Fig. 1 dargestellte Position verlagert, in der sich das Spanngestänge 17 in der dem geschlossenen Verdeckzustand zugeordneten Übertotpunktlage befindet. Der Hilfsaktuator 22 wird dabei wieder vollständig ausgefahren. Bei entriegeltem Dachverschluss wird nun der Hauptlenker 2 in Pfeilrichtung 28 (Figur 3) durch Betätigung des Hauptaktuators verschwenkt. Bei dieser Stellbewegung des Hauptlenkers 2 aus der in Fig. 1 gezeigten Position in die Ablageposition gemäß Fig. 4 behält das Stellglied des Hilfsaktuators 22 seine ausgefahrene Position bei, so dass auch der Abstand zwischen dem Gelenk 24 des Hilfsaktuators 22 an der Konsole 4 und dem Gelenk 23 des Stellglieds am zweiten Spannlenker 19 des Spanngestänges 17 während der Ablegbewegung des Hauptlenkers 2 unverändert beibehalten wird. Auf Grund des Abstandes zwischen Gelenk 24 des Hilfsaktuators 22 und des Gelenks 3 des Hauptlenkers 2 an der Konsole 4 sowie der konstanten Länge des Hilfsaktuators wird bei einer Schwenkbewegung des Hauptlenkers 2 in Pfeilrichtung 28 der Stoffspannbügel eine Relativ-Schwenkbewegung um sein Gelenk 7 relativ zum Hauptlenker 2 im Gegenuhrzeigersinn in Pfeilrichtung 27 ausführen. Der Hilfsaktuator 22 übernimmt hierbei die Funktion eines passiven Führungselementes, da die Stellarbeit ausschließlich über den Hauptaktuator aufgebracht wird. Auf Grund der Relativ-Schwenkbewegung nimmt der Stoffspannbügel 6, wie in Fig. 4 dargestellt, in der Ablagestellung ebenso wie der Hauptlenker 2 eine etwa horizontale Position ein, die jedoch gegenüber der Spannstellung aus Fig. 1 vertikal nach unten abgesenkt ist. In der abgesenkten Position befindet sich das Faltverdeck in einem andeutungsweise dargestellten, heckseitigen Verdeckkasten 29.

### Bezugszeichenliste

- 1: Verdeckgestänge
- 2: Hauptlenker
- 3: Gelenk
- 4: Konsole
- 5: Hauptaktuator
- 6: Stoffspannbügel
- 7: Gelenk
- 8: Sturmgestänge
- 9: Sturmhebel
- 10: Sturmhebel
- 11: Gelenk
- 12: Gelenk
- 13: Gelenk
- 14: Hauptsäule
- 15: Scheibenrahmen
- 16: Heckscheibe
- 17: Spanngestänge
- 18: Spannlenker
- 19: Spannlenker
- 20: Gelenk
- 21: Gelenk
- 22: Hilfsaktuator
- 23: Gelenk
- 24: Gelenk
- 25: Pfeilrichtung
- 26: Pfeilrichtung
- 27: Pfeilrichtung
- 28: Pfeilrichtung
- 29: Verdeckkasten

## Patentansprüche

1. Verstellbares Fahrzeugdach, das ein zwischen einer Schließstellung und einer Ablagestellung verstellbares Faltverdeck mit einem Verdeckgestänge (1) und einem Verdeck-Bezugstoff aufweist,
- mit einem dem Verdeckgestänge zugeordneten Stoffspannbügel (6), der in Schließstellung des Faltverdecks in einer den Verdeck-Bezugstoff mit Spannung beaufschlagenden Spannstellung gehalten und von einem Hilfsaktuator (22) zwischen der Spannstellung und einer Lösestellung zu verstellen ist,
- mit einem an der Fahrzeugkarosserie (4) schwenkbar gelagerten und über einen Hauptaktuator (5) verstellbaren Hauptlenker (2) des Verdeckgestänges (1), an dem der Stoffspannbügel (6) schwenkbar gelagert ist,
- mit einem zweiteiligen Sturmgestänge (8), über das der Stoffspannbügel (6) in Schließstellung des Faltverdecks in der Spannstellung gehalten ist, wobei das Sturmgestänge (8) zwei über ein Gelenk (11) gekoppelte Sturmhebel (9, 10) umfasst, die in Spannstellung in einer totpunktnahen Lage stehen,
- mit einem Spanngestänge (17), das mit dem Sturmgestänge (8) gekoppelt ist, wobei das Spanngestänge (17) zwei gelenkig gekoppelte Spannlenker (18, 19) umfasst, von denen ein erster Spannlenker (18) gelenkig mit dem Sturmgestänge (8) verbunden ist,
**dadurch gekennzeichnet ,**
**dass** der zweite Spannlenker (19) des Spanngestänges (17) gelenkig mit dem Hauptlenker (2) verbunden ist und die beiden Spannlenker (18, 19) in Spannstellung in Übertotpunktlage stehen.

2. Fahrzeugdach nach Anspruch 1,
**dadurch gekennzeichnet ,**
**dass** das Spanngestänge (17) und der Stoffspannbügel (6) an dem Hauptlenker (2) eine gemeinsame Drehachse aufweisen.

3. Fahrzeugdach nach Anspruch 1 oder 2,
**dadurch gekennzeichnet ,**
**dass** das Spanngestänge (17) benachbart zu dem Gelenk (11) zwischen den Sturmhebeln (9, 10) gelenkig mit dem Sturmgestänge (8) verbunden ist.

4. Fahrzeugdach nach einem der Ansprüche 1 bis 3,
**dadurch gekennzeichnet ,**
**dass** der Hilfsaktuator (22) gelenkig an der Fahrzeugkarosserie (Konsole 4) gehalten ist und der Hilfsaktuator (22) und der Hauptlenker (2) über einen der beiden Spannlenker (18, 19) aneinander gekoppelt sind.

## Claims

1. Adjustable vehicle roof which has a folding top which can be adjusted between a closed position and a stowing position, having a top linkage (1) and having a top covering material,
- having a material tensioning bow (6) which is assigned to the top linkage, which material tensioning bow (6), in the closed position of the folding top, is held in a tensioned position in which the top covering material is acted on with tension, and which material tensioning bow (6) can be adjusted between the tensioned position and a loose position by an auxiliary actuator (22),
- having a main link (2), which is pivotably mounted on the vehicle body (4) and which can be adjusted by means of a main actuator (5), of the top linkage (1), on which main link (2) the material tensioning bow (6) is pivotably mounted,
- having a two-part storm linkage (8), by means of which, in the closed position of the folding top, the material tensioning bow (6) is held in the tensioned position, with the storm linkage (8) comprising two storm levers (9, 10) which are coupled by means of a joint (11) and which, in the tensioned position, are at a position close to a dead centre,
- having a tensioning linkage (17) which is coupled to the storm linkage (8), with the tensioning linkage (17) comprising two tensioning links (18, 19) which are articulatedly coupled and of which a first tensioning link (18) is articulatedly connected to the storm linkage (8),
**characterized**
**in that** the second tensioning link (19) of the tensioning linkage (17) is articulatedly connected to the main link (2) and, in the tensioned position, the two tensioning links (18, 19) are in a beyond-dead-centre position.

2. Vehicle roof according to Claim 1,
**characterized**
**in that** the tensioning linkage (17) and the material tensioning bow (6) on the main link (2) have a common rotational axis.

3. Vehicle roof according to Claim 1 or 2,
**characterized**
**in that** the tensioning linkage (17) is articulatedly connected, adjacent to the joint (11) between the storm levers (9, 10), to the storm linkage (8).

4. Vehicle roof according to one of Claims 1 to 3,
**characterized**
**in that** the auxiliary actuator (22) is articulatedly held on the vehicle body (bracket 4) and the auxiliary actuator (22) and the main link (2) are coupled to one another by means of one of the two tensioning links (18, 19).

## Revendications

1. Toit ouvrant de véhicule, qui présente une capote pliante pouvant être déplacée entre une position de fermeture et une position de rangement, avec un mécanisme de capote (1) et une toile pour capote,
- comprenant un arceau tendeur de toile (6) associé au mécanisme de capote, qui est maintenu, dans la position de fermeture de la capote pliante, dans une position de tension tendant la toile pour capote, et devant être déplacé par un actionneur auxiliaire (22) entre la position de tension et une position de relâchement,
- comprenant un bras principal (2) du mécanisme de capote (1) monté de manière pivotante sur la carrosserie du véhicule, et pouvant être déplacé par le biais d'un actionneur principal (5), sur lequel l'arceau tendeur de toile (6) est monté de manière pivotante,
- comprenant un mécanisme de tempête (8) en deux parties, par le biais duquel l'arceau tendeur de toile (6) est maintenu dans la position de tension dans la position de fermeture de la capote pliante, le mécanisme de tempête (8) comprenant deux leviers de tempête (9, 10) accouplés par le biais d'une articulation (11), qui sont dans une position proche du point mort dans la position de tension,
- comprenant un mécanisme de tension (17), qui est accouplé au mécanisme de tempête (8), le mécanisme de tension (17) comprenant deux bras de tension (18, 19) accouplés de manière articulée dont un premier bras de tension (18) est connecté de manière articulée au mécanisme de tempête (8),
**caractérisé en ce que**
le deuxième bras de tension (19) du mécanisme de tension (17) est connecté de manière articulée au bras principal (2), et les deux bras de tension (18, 19) sont dans une position au-dessus du point mort dans la position de tension.

2. Toit de véhicule selon la revendication 1,
**caractérisé en ce que**
le mécanisme de tension (17) et l'arceau tendeur de toile (6) présentent un axe de rotation commun sur le bras principal (2).

3. Toit de véhicule selon la revendication 1 ou 2,
**caractérisé en ce que**
le mécanisme de tension (17) est connecté de manière articulée au mécanisme de tempête (8) à proximité de l'articulation (11) entre les leviers de tempête (9, 10).

4. Toit de véhicule selon l'une quelconque des revendications 1 à 3,
**caractérisé en ce que**
l'actionneur auxiliaire (22) est maintenu de manière articulée (22) à la carrosserie du véhicule (console 4) et l'actionneur auxiliaire (22) et le bras principal (2) sont accouplés l'un à l'autre par le biais de l'un des deux bras de tension (18, 19).
